# EUROPÄISCHE PATENTSCHRIFT

(11) **EP 2 924 322 B1**
(45) Veröffentlichungstag und Bekanntmachung des Hinweises auf die Patenterteilung: **25.07.2018**
(21) Anmeldenummer: 15159440.5
(22) Anmeldetag: 17.03.2015
(51) Int. Cl.: F16L 55/132, F16L 55/11, F16J 13/02

(54) **DICHTUNGSVORRICHTUNG**
SEALING DEVICE
DISPOSITIF D'ÉTANCHÉITÉ

(30) Priorität: 26.03.2014 DE 102014205626
(43) Veröffentlichungstag der Anmeldung: 30.09.2015
(73) Patentinhaber: Ford Global Technologies, LLC, Dearborn, MI 48126 (US)
(72) Erfinder: Kutzinsky, Ralf, 50827 Köln (DE); Meier-Sponheuer, Jürgen, 44623 Herne (DE); Michels, Ralf, 51371 Leverkusen (DE); Naumann, Oliver, 56271 Mündersbach (DE); Bäumler, Wilfried, 51429 Bergisch Gladbach (DE)
(74) Vertreter: Dörfler, Thomas

(56) Entgegenhaltungen:
- CH-A- 263 230
- DE-C1- 861 060
- DE-U1-202005 000 521
- GB-A- 189 319 943
- US-A- 3 444 898

## Beschreibung

Die Erfindung betrifft eine Dichtungsvorrichtung für zylindrische oder konische Öffnungen mit einem länglichen Dichtkörper aus elastisch verformbarem Material, einem Zugbolzen, der sich durch den mittleren, freien Durchgangsbereich des Dichtkörpers erstreckt, einer am inneren Ende des Zugbolzens sitzenden Zugbuchse, einem am äußeren Ende des Zugbolzens angeordneten Gegenhalter, durch den der Zugbolzen hindurchgreift, und einem auf das äußere, durch den Gegenhalter hindurchragende Ende des Zugbolzens einwirkenden Betätigungselement, das bei Ausübung einer Zugkraft auf den Zugbolzen den Dichtkörper verformt und dabei dessen äußeren Umfang vergrößert. Ferner betrifft die Erfindung ein Verfahren zur Verwendung der erfindungsgemäßen Dichtvorrichtung.

Dichtungsvorrichtungen der genannten Art sind seit langer Zeit als Flaschenverschlüsse bekannt (DE 861 060 C1). Bei einem solchen bekannten Flaschenverschluss ist ein Dichtkörper vorgesehen, der zwischen der Zugbuchse und dem Gegenhalter angeordnet ist und an seinem Außenumfang eine zylindrische Gestalt aufweist. Zur Ausübung einer Zugkraft auf den Zugbolzen dient dabei ein Exzenter, der mit einem Handhebel versehen ist. Derartige Flaschenverschlüsse sind aber nicht für industrielle Zwecke geeignet, wo es auf präzise und sichere Dichtungen ankommt.

Aus der CN000101986120B ist bereits eine entsprechende Dichtungsvorrichtung bekannt, die sich auch für industrielle Zwecke anwenden lässt. Der Dichtkörper ist dabei leicht konisch ausgebildet und wird in die Öffnung eines Bauteils eingesetzt, die eine entsprechende Öffnung zum Innengreifen aufweist. Der Dichtkörper wird dann mittels eines Hebelmechanismus in axialer Richtung gestaucht, wobei sich sein Durchmesser vergrößert und dadurch eine Dichtung zum Umfangsrand der zu verschließenden Öffnung erzielt wird. Eine solche Dichtungsvorrichtung ist nur bedingt für industrielle Zwecke brauchbar, denn beispielsweise werden bei der Prüfung von Motoren, durch den hohen Anteil von automatisierten Prozessen, vermehrt Prüfungsverfahren zur Qualitätskontrolle angewendet, wie z.B. Leak-Tests, Cold-Tests oder Helium-Tests, die ein Abdichten oder Befüllen von Versorgungsleitungen bzw. Komponenten-Öffnung erfordern. Dabei werden häufig Dichtungsvorrichtungen eingesetzt, bei denen die Dichtkörper aus einem relativ weichen gummielastischen Material mit einer Shore-Härte im Bereich von 60 bis 75 verwendet werden. Die relativ weichen Dichtkörper, die durch axiale Druckkräfte radial ausgedehnt werden, um z.B. eine Bohrung abzudichten, weisen nur eine geringe Standzeit auf, denn durch das Stauchen und Ausdehnen entstehen innerhalb kürzester Zeit Risse im gesamten Dichtungsmaterial, die die Dichtungsvorrichtung relativ schnell unbrauchbar machen. Die Folgen dieses Alterungsprozesses sind beispielsweise in der Motorenfertigung allmählich zunehmende Leak-Raten, wodurch Ausfälle in den Prüfmaschinen und somit ein erheblicher Produktionsverlust entstehen kann.

Der Erfindung liegt daher die Aufgabe zugrunde, eine Dichtungsvorrichtung der eingangs genannten Art derart weiterzubilden, dass eine schonende Umlenkung der axial wirkenden Kräfte in eine radial ausgerichtete Kräfteverteilung entsteht, um hohe Standzeiten bei geringem Verschleiß zu erreichen, wobei gleichzeitig gewährleistet sein soll, dass die Dichtungsvorrichtung auch als zuverlässiges Spannelement zum Greifen des abzudichtenden Bauteils verwendbar ist. Erfindungsgemäß wird diese Aufgabe gelöst mit den Merkmalen des Anspruchs 1.

Erfindungsgemäß wird diese Aufgabe dadurch gelöst, dass der Dichtkörper über seine Länge konkav ausgebildet ist, dass die beiden an die engste Stelle angrenzenden Bereiche des Dichtkörpers im Wesentlichen kegelstumpfförmig ausgebildet sind und dass, wenn der Zugbolzen betätigt wird, durch das Zusammenziehen des Dichtkörpers an seiner dünnsten Stelle eine Abrollzone entsteht, bei der sich eine erste Fläche unter eine zweite Fläche schiebt und die zweite Fläche auf der ersten Fläche abrollt, wodurch bei fortschreitendem Verformungsprozess vor und hinter der Abrollzone jeweils ein Wulst entsteht und sich zwei Dichtlippen bilden, und zwar eine hintere Dichtlippe nahe dem Gegenhalter und eine vordere Dichtlippe nahe der Zugbuchse.

Indem der Dichtkörper über seine Länge konkav ausgebildet ist und die beiden an die engsten Stelle angrenzenden Bereiche des Dichtkörpers im Wesentlichen kegelstumpfförmig ausgebildet sind, erfolgt bei Betätigung des Zugbolzen mittels der in axialer Richtung wirkenden Kraft eine schonende radial ausgerichtete Kräfteverteilung, wobei zwischen dem Dichtkörper und der abzudichtenden Öffnung zwei hintereinander angeordnete Anpresszonen entstehen, nämlich eine hintere Dichtlippe und eine vordere Dichtlippe.

Aufgrund der konkaven Ausbildung des Dichtkörpers und seiner speziellen Geometrie wird eine völlig neue Abdichtungstechnik geschaffen. Der Dichtkörper ist über seine Länge konkav polygonförmig ausgebildet, sodass die in Axialrichtung wirkenden Kräfte extrem schonend in eine radial ausgerichtete Kräfteverteilung umgelenkt werden. Bei der Stauchung entstehen zwei Dichtlippen bzw. zwei Anpresszonen zwischen dem Dichtkörper und der abzudichtenden Öffnung bzw. Bohrung von Werkstücken, die eine sehr zuverlässige und stabile Dichtung bewirken.

Beim Stauchen des Dichtkörpers erfolgt ein Ab- und Ineinanderrollen der einzelnen Bereiche des Dichtkörpers. In einem ersten Schritt der Kraftaufbringung geschieht ein Aufbäumen des mittleren, relativ dünnen Materials, welches in den folgenden Schritten zu zwei ausgeprägten Dichtlippen gefaltet wird.

Der Dichtungseffekt wird also nicht, wie bei der bekannten Dichtungsvorrichtung, allein durch reine Stauchung und damit Vergrößerung des äußeren Durchmessers erzielt, sondern insbesondere durch die Faltung des Materials des Dichtkörpers und das Entstehen zweier Dichtlippen.

Aus der GB 19,943 A ist bereits ein Dichtkörper bekannt, der über seine Länge eine etwa konkav ausgebildete Gestalt aufweist, denn der mittlere Bereich des Dichtkörpers ist bei dieser Konstruktion dünner ausgebildet als die beiden Endbereiche. Der Dichtmechanismus ist jedoch bei dieser Dichtungsvorrichtung ein völlig anderer. Der Dichtkörper umgibt den Zugbolzen in einem weiten Abstand, sodass ein relativ großer, ringförmiger Raum zwischen dem Zugbolzen und dem Dichtkörper einerseits und den beiden axialen Endplatten andererseits entsteht. Der Dichtungsmechanismus erfolgt dadurch, dass die beiden Endplatten A und B gegeneinander gefahren werden, wodurch sich der mittlere, dünner ausgebildete Teil des Dichtkörpers nach außen wölbt und an dem abzudichtenden Rohrende zur Anlage kommt. Darüber hinaus sind noch diverse weitere Dichtungsflächen zwischen dem ringförmigen Dichtkörper und den Endplatten vorgesehen, wobei beispielsweise die an den Endplatten vorgesehenen Flansche an den Flanschen des Dichtkörpers zur Anlage kommen. Ferner ist ein Dichtungsbereich zwischen den Endplatten und den Schrägflächen des Dichtkörpers vorgesehen. Der relativ große ringförmige Raum zwischen dem Zugbolzen und dem Dichtkörper dient dabei zur Entlüftung des abzudichtenden Rohrs, und zwar gelangt das zu entlüftende Medium über ein Eingangsrohr in den Ringraum und wird auf der gegenüberliegenden Seite über eine gesonderte Leitung abgeführt.

Ferner ist eine Verschlusseinrichtung für ein in einen Abwasserkanal mündendes Anschlussrohr bekannt (DE 20 2005 000 521 U1). Der Dichtungsmechanismus wird dabei mit Hilfe einer Spreizeinrichtung erzielt, die aus zwei gegeneinander fahrbaren kegelstumpfförmigen Spreizelementen besteht. Zwischen den beiden Kegelstümpfen verläuft ein elastischer Mantel, der beim Zusammenfahren der beiden Kegelstümpfe gegen die Rohrinnenseite gepresst wird. Dabei wird der elastische Mantel lediglich im Bereich der äußeren Enden der Kegelstümpfe an die innere Wandung gepresst, wobei die Pressung an lediglich diesen beiden Stellen für eine dauerhaft feste Verbindung ausreicht. Ein solcher elastischer Mantel ist nicht mit dem Dichtkörper gemäß der Erfindung vergleichbar.

Durch die erfindungsgemäße Konstruktion ist es insbesondere möglich, für die Herstellung des Dichtkörpers Materialien zu verwenden, die eine relativ hohe Härte aufweisen. Vorzugsweise besteht der Dichtkörper aus einem Elastomer mit einer Shore-Härte von über 75.

Um eine optimale radiale Ausdehnung des konkav ausgebildeten Dichtkörpers zu erzielen, liegt die engste Stelle des Dichtkörpers etwa in seinem mittleren Bereich.

Die Öffnungswinkel der beiden aneinander angrenzenden kegelstumpfförmigen Bereiche können gleich sein. Eine besonders wirksame Konstruktion besteht aber darin, dass der Öffnungswinkel des auf der Seite des Gegenhalters liegenden kegelstumpfförmigen Bereichs größer als der auf der Seite der Zugbuchse angeordnete kegelstumpfförmige Bereich ist. Das Prinzip funktioniert aber auch, wenn das Dicht- und Spannelement um 180° um seine Hochachse gedreht wird. Dies ist nur in dem Sinn relevant, ob das Bauteil, konisch oder zylindrisch ist.

Um einen guten Sitz der erfindungsgemäßen Dichtungsvorrichtung in einem abzudichtenden Hohlzylinder zu erzielen, kann der Durchmesser der Zugbuchse dem Querschnitt der abzudichtenden zylindrischen Öffnung mit geringem Untermaß angepasst sein. Dadurch wird bereits von Beginn an ein optimaler Sitz der Dichtungsvorrichtung in der abzudichtenden Öffnung erzielt, und es wird dadurch ein günstiger Verformungsmechanismus des Dichtkörpers während des Abrrollprozesses unterstützt.

Der an die Zugbuchse angrenzende Bereich des Dichtkörpers wird so ausgelegt, dass er einen geringfügig kleineren Durchmesser als die Zugbuchse aufweist. Das gleiche gilt auch für den an den Gegenhalter angrenzenden Bereich des Dichtkörpers, der dort ebenfalls einen geringfügig kleineren Durchmesser als die abzudichtende Öffnung aufweist. Diese Maßnahme gewährt einen sehr guten Kantenschutz, wodurch der Verschleiß an diesen hochsensiblen Zonen erheblich vermindert und somit die Standzeit der Vorrichtung erhöht wird.

Zur Vermeidung unnötiger Verschleißkanten können die beiden kegelstumpfförmigen Bereiche des Dichtkörpers an ihren voneinander abgewandten Enden zylindrische Abflachungen aufweisen, wodurch die Wirkung des Kantenschutzes noch weiter verbessert wird.

Ferner kann der Dichtkörper an seinen beiden Enden im Durchmesser reduzierte, ringzylindrische Abschnitte aufweist, die in entsprechende Aufnahmebereiche der Zugbuchse und des Gegenhalters eingreifen. Dadurch wird ein besonders guter Sitz des Dichtkörpers erzielt und eine optimale axiale Krafteinleitung in dem Dichtkörper erreicht.

Darüber hinaus kann im entspannten Zustand des Dichtkörpers zwischen den äußeren Stirnenden der kegelstumpfförmigen Bereiche und den äußeren Anlageenden der Zugbuchse und des Gegenhalters je ein Luftspalt vorgesehen sein.

Das Betätigungselement, das auf den Zugbolzen eine Zugkraft ausübt, kann diverse Konstruktionsmerkmale aufweisen. Ein bevorzugtes Ausführungsbeispiel besteht darin, dass das Betätigungselement als schwenkbar mit dem äußeren Ende des Zugbolzens verbundener Exzenter ausgebildet ist, der mit einem Hebel zur Verschwenkung des Exzenters ausgestattet ist.

Die erfindungsgemäße Dichtungsvorrichtung kann ebenso gut auch zum schnellen und sicheren Greifen und Lösen von Bauteilen verwendet werden, die mit Bohrungen zum Innengreifen versehen sind.

Um ein leichtes und schnelles Einführen in die entsprechende abzudichtende bzw. zu ergreifende Bohrung zu ermöglichen, kann sich an die Zugbuchse ein Führungselement anschließen.

Durch die mannigfaltige Verwendbarkeit der erfindungsgemäßen Dichtvorrichtung kann der Greif- und Dichtvorgang mit anschließenden Dichtigkeitsprüfungen oder Befüllungsoperationen kombiniert werden, sodass die Arbeitsabläufe auf diesem Gebiet noch intensiver optimierbar sind.

Die Erfindung ist in der Zeichnung beispielhaft veranschaulicht und im Nachstehenden im Einzelnen anhand der Zeichnung beschrieben. Es zeigen:
- Fig. 1:: in perspektivischer Darstellung ein Ausführungsbeispiel der erfindungsgemäßen Dichtvorrichtung, die auch zum Greifen einsetzbar ist,
- Fig. 2:: im verkleinerten Maßstab einen Schnitt durch die Dichtvorrichtung gemäß Fig. 1,
- Fig. 3:: in vergrößerter Darstellung den Bereich III aus Fig. 2,
- Fig. 4:: den gleichen Schnitt wie Fig. 2, bei der die Dichtvorrichtung in ein rohrförmiges Werkstück eingesetzt ist,
- Fig. 5:: den gleichen Schnitt wie Fig. 4, bei dem bereits eine axiale Kraft auf den Dichtkörper ausgeübt wird,
- Fig. 6:: den gleichen Schnitt wie Fig. 4 und 5, bei dem die Axialkraft vergrößert und der Dichtkörper noch weiter verformt ist,
- Fig. 7:: den gleichen Schnitt wie Fig. 6 beim Aufbringen einer noch größeren Axial kraft,
- Fig. 8:: den gleichen Schnitt wie Fig. 7, bei dem die maximale Axialkraft auf den Dichtkörper aufgebracht ist,
- Fig. 9:: ein weiteres Ausführungsbeispiel der erfindungsgemäßen Dichtvorrichtung zum Abdichten bzw. Aufnehmen eines Werkstücks mit einer konischen Aufnahmeöffnung,
- Fig. 10:: den gleichen Schnitt wie Fig. 9 durch die Dichtvorrichtung im Zusammenhang mit einem Werkstück mit einer zylindrischen Aufnahmeöffnung,
- Fig. 11:: ein Ausführungsbeispiel, mit der ein Spannen, Abdichten und Befüllen möglich ist,
- Fig. 12:: ein Ausführungsbeispiel als Rohrverbinder und
- Fig. 13:: eine detaillierte Darstellung der einzelnen Verformungsstufen des Dichtkörpers.

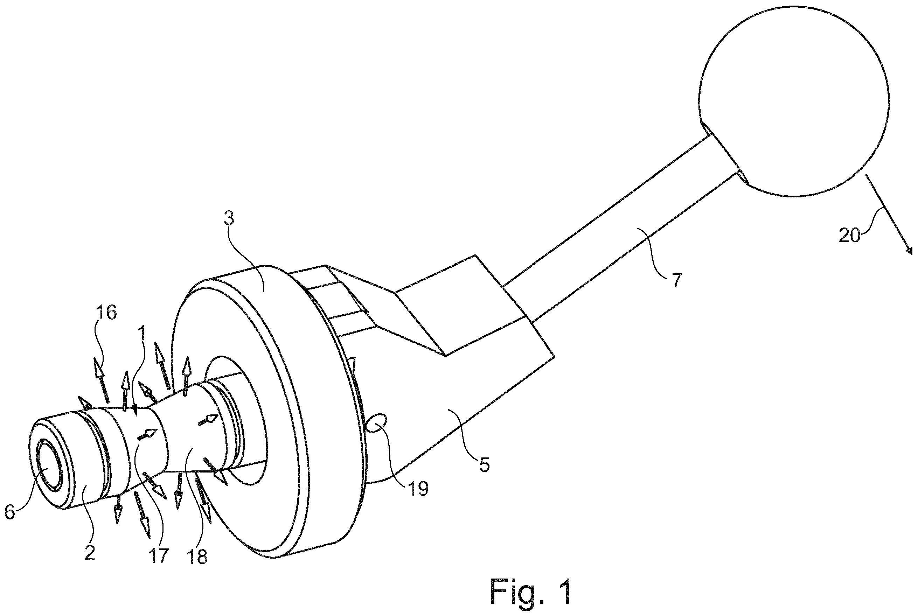

Gemäß Fig. 1 der Zeichnung besteht die erfindungsgemäße Dichtvorrichtung, die zum Verschließen von zylindrischen oder konischen Öffnungen vorgesehen ist, aus einem länglichen Dichtkörper 1, der über seine Länge eine konkave Geometrie aufweist. Diese wird durch zwei kegelstumpfförmige Bereiche 17 und 18, deren kleinere Durchmesser zur Mitte des Dichtkörpers 1 hin gerichtet sind. Somit entsteht an deren Treffpunkt die Stelle mit dem geringsten Materialquerschnitt des Dichtkörpers 1.

Zur Herstellung einer Dichtfunktion wird der Dichtkörper 1 in seiner Längsrichtung zusammen gezogen, sodass sich sein Durchmesser durch Abrollen erweitert und an der abzudichtenden zylindrischen oder konischen Wandung dichtend anliegt.

Zur Verformung des Dichtkörpers 1 weist dieser einen mittleren Durchgangsbereich auf, durch den sich ein Zugbolzen 6 erstreckt. An dem in eine abzudichtende Öffnung einzuführenden Ende ist eine fest auf dem Zugbolzen 6 sitzende Zugbuchse 2 angeordnet, an der das entsprechende Ende des Dichtkörpers 1 anliegt. Am anderen Ende des Zugbolzens 6 ist ein Gegenhalter 3 angeordnet, durch den der Zugbolzen 6 hindurchgreift. An dem durch den Gegenhalter 3 hindurchgreifenden Ende des Zugbolzens 6 ist ein auf den Zugbolzen 6 einwirkendes Betätigungselement vorgesehen, das bei Ausübung einer Zugkraft auf den Zugbolzen 6 den Dichtkörper 1 zusammenzieht und damit das Abrollverhalten und den damit verbundenen Dichtvorgang auslöst.

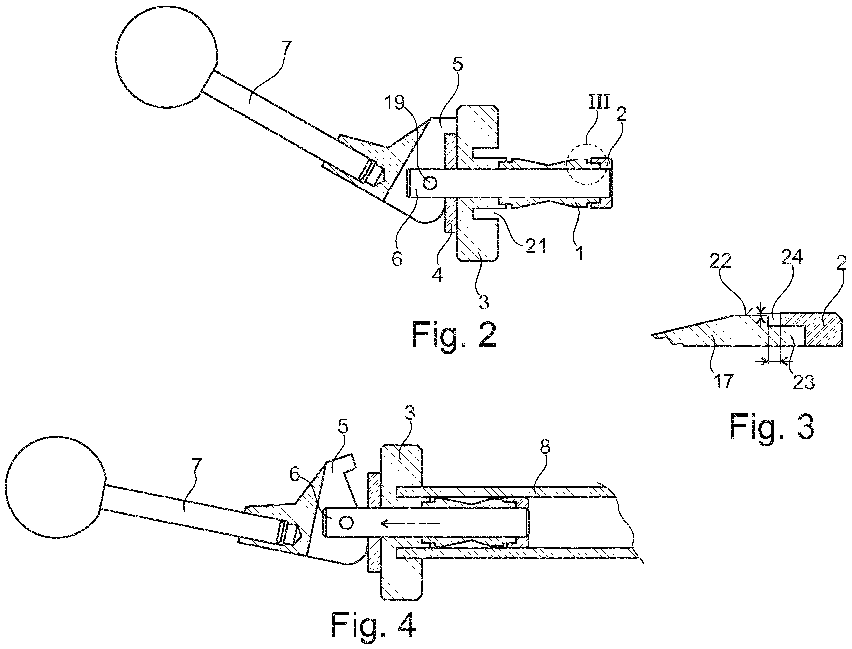

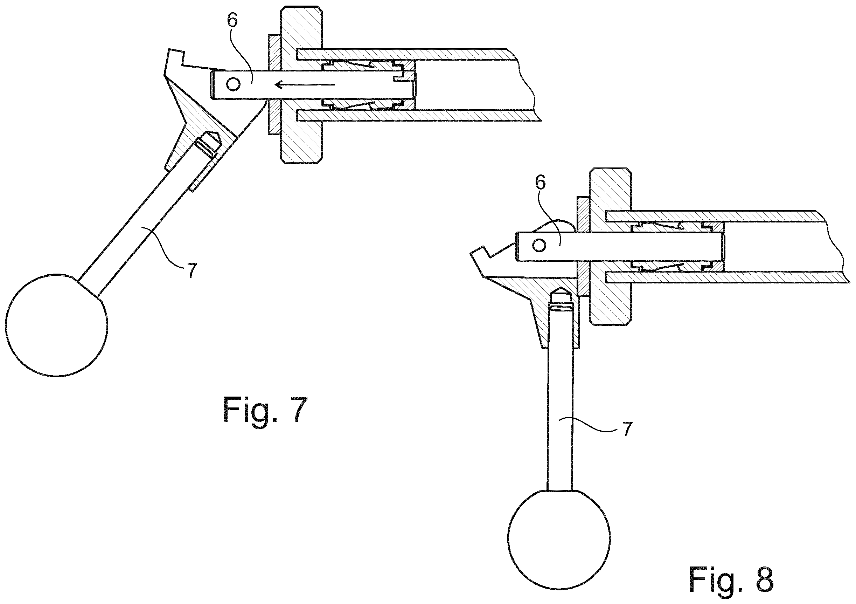

Als Betätigungselement ist bei dem in Fig. 1 bis 8 dargestellten Ausführungsbeispiel ein Exzenter 5 vorgesehen, der sich gegen den Gegenhalter 3 bzw. eine in Fig. 2 dargestellte Druckplatte 4 abstützt. Der Exzenter 5 ist über einen Gelenkstift 19 schwenkbar mit dem äußeren Ende des Zugbolzens 6 verbunden. Zum Verschwenken des Exzenters 5 ist dieser mit einem von Hand zu betätigenden, starren Hebel 7 ausgerüstet.

Wenn der Hebel 7 in Fig. 1 in Richtung des Pfeils 20 nach unten verschwenkt wird, wird der Zugbolzen 6 allmählich aus dem Gegenhalter 3 herausgezogen, sodass der Dichtkörper 1 verformt wird. Dabei entsteht eine umlaufende Kräfteverteilung, die durch die Pfeile 16 in Fig. 1 veranschaulicht ist.

In dem in Fig. 2 dargestellten Querschnitt ist der Exzenter 5 in seiner inaktiven Stellung gezeigt, in der der Dichtkörper 1 noch völlig unverformt ist. Wenn dann gemäß Fig. 2 der Hebel 7 in Richtung des Pfeils 20 nach unten gedrückt wird, wird der Zugbolzen 6 allmählich in der Zeichnung nach links verschoben und nimmt dann schrittweise die in den Figuren 4 bis 8 dargestellten Positionen ein.

In den Figuren 4 bis 8 ist die erfindungsgemäße Dichtvorrichtung auf ein rohrförmiges Werkstück 8 aufgesetzt, welches mittels der Dichtvorrichtung abzudichten ist. Das
rohrförmige Werkstück 8 greift dabei in einen in dem Gegenhalter 3 ausgebildeten Ringspalt 21 ein, sodass dadurch ein fester Sitz zwischen der Dichtvorrichtung und der abzudichtenden Öffnung des Werkstücks 8 entsteht.

Wie aus den Figuren 4 bis 8 zu erkennen ist, ist der Durchmesser der Zugbuchse 2 im Querschnitt der abzudichtenden Öffnung angepasst, und zwar dergestalt, dass sie mit einem geringen Untermaß in die abzudichtende Öffnung eingreift.

Wie insbesondere aus Fig. 3 zu erkennen ist, weisen die beiden kegelstumpfförmigen Bereiche 17 und 18 des Dichtkörpers 1 an ihren voneinander abgewandten Enden zylindrische Abflachungen 22 auf, die gegenüber dem äußeren Umfang der Zugbuchse 2 ein geringes Untermaß aufweisen. Diese Maßnahme dient der Kantenschonung.

Wie aus Fig. 2 und 3 ebenfalls zu entnehmen ist, weist der Dichtkörper an seinen beiden Enden im Durchmesser reduzierte ringzylindrische Abschnitte 23 auf, die in entsprechende Aufnahmebereiche der Zugbuchse 2 bzw. des Gegenhalters 3 formschlüssig eingreifen.

Im entspannten Zustand des Dichtkörpers 1, wie er in den Figuren 2 und 3 dargestellt ist, ist zwischen den äußeren Stirnenden der kegelstumpfförmigen Bereiche 17 und 18 und den äußeren Anlageenden der Zugbuchse 2 und des Gegenhalters 3 je ein Luftspalt 24 vorgesehen.

Obgleich in der Zeichnung nicht besonders hervorgehoben, kann der Öffnungwinkel des auf der Seite des Gegenhalters 3 liegenden kegelstumpfförmigen Bereichs 18 größer ausgebildet sein als der auf der Seite der Zugbuchse 2 angeordnete kegelstumpfförmige Bereich 17. Diese Variante eignet sich insbesondere zum Abdichten von konischen Werkstücköffnungen.

Wie weiterhin aus den Figuren 4 bis 8 zu entnehmen ist, wird durch das Umlegen des Exzenters 5 eine axiale Bewegung des Zugbolzens 6 erzeugt, wodurch der gummielastische Dichtkörper 1 zusammengezogen wird.

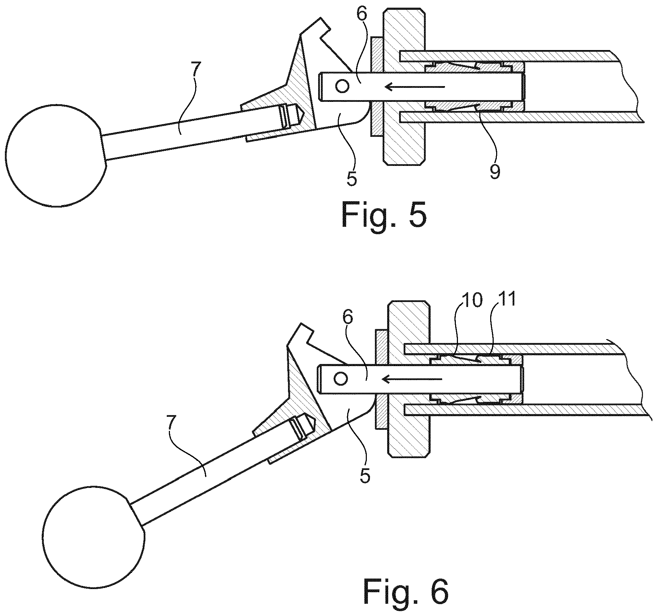

In den Figuren 5 bis 8 ist die allmähliche Verformung des Dichtkörpers 1 in verschiedenen Stufen dargestellt. Wie aus diesen Figuren zu entnehmen ist, entsteht durch das Zusammenziehen des Dichtkörpers 1 an seiner dünnsten Stelle eine Abrollzone 9, bei der sich eine erste Fläche unter eine zweite Fläche schiebt. Dabei rollt die zweite Fläche auf der ersten ab.

Wenn der Verformungsprozess weiter fortschreitet, entstehen vor und hinter der Abrollzone 9 jeweils ein Wulst, sodass sich innerhalb des abzudichtenden Werkstücks 8 zwei Dichtlippen bilden, und zwar eine hintere Dichtlippe 10 nahe dem Gegenhalter 3 und eine vordere Dichtlippe 11 nahe der Zugbuchse 2.

Durch das Ineinanderrollen der beiden winkligen Flächen werden die axialen Kräfte auf eine sehr schonende Art und Weise in radial wirkende Kräfte umgewandelt. Dabei ist insbesondere in Fig. 1 erkennbar, dass sich die radialen Kräfte auf die beiden winkligen Flächen der kegelstumpfförmigen Bereiche 17 und 18 verteilen. Der gummielastische Dichtkörper 1 wird also nicht nur gestaucht, sondern durch Abrollen und gegenseitiges Unterschieben in seine abdichtende Form gebracht.

Durch das Zusammenziehen des Dichtkörpers 1 bei gleichzeitigem Abrollen und Unterschieben der kegelstumpfförmigen Bereiche werden die axial aufgebrachten Kräfte optimal auf zwei sich radial ausbreitende Dichtlippen 10 und 11 verteilt. Durch diesen Verformungsmechanismus ist es auch möglich, Elastomere mit wesentlich größerer Shore-Härte einzusetzen, als es bisher üblich war. Mit diesen härteren Elastomeren sind auch darüber hinaus viel höhere Anpresskräfte möglich.

Die erfindungsgemäße Dichtungsvorrichtung kann über ihre Aufgabe als Dichtelement auch zum schnellen und sicheren Greifen und Lösen von Bauteilen verwendet werden, die mit Bohrungen zum Innengreifen versehen sind.

Im Sinne einer optimalen und schlanken Produktion kann die erfindungsgemäße Dichtungsvorrichtung sehr vielseitig eingesetzt werden, und zwar beispielsweise zum Greifen von Bauteilen mit der gleichzeitigen Möglichkeit, eine Dichtigkeitsprüfung oder Befülloperation durchzuführen.

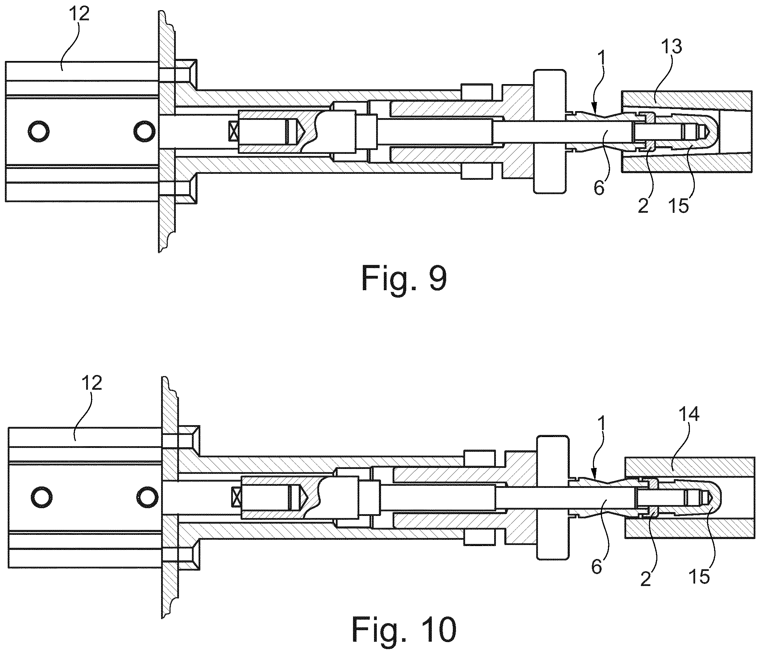

Hierzu eignet sich beispielsweise die in Fig. 9 und 10 dargestellte Ausführungsform der erfindungsgemäßen Vorrichtung, bei der als Betätigungsmechanismus des Zugbolzens 6 ein Pneumatik- oder Hydraulikzylinder 12 vorgesehen ist. Diese Ausführungsform der erfindungsgemäßen Vorrichtung kann sowohl für ein Werkstück 13 mit konischer Bohrung als auch für ein Werkstück 14 mit zylindrischer Bohrung eingesetzt werden.

Um das Greifen eines entsprechenden Werkstücks 13 bzw. 14 zu erleichtern, kann sich an die Zugbuchse 2 ein Führungselement 15 anschließen, welches zu seinem vorderen Ende hin leicht konisch ausgebildet ist, sodass es sich bequem in die entsprechend zu ergreifende und abzudichtende Bohrung einfädeln lässt.

Weitere Anwendungsbeispiele in der automatisierten Produktionstechnik sind möglich. Die erfindungsgemäße Vorrichtung ist immer dann einsetzbar, wenn Teile beschädigungsfrei, sicher und effizient transportiert bzw. befüllt oder abgedichtet werden müssen.

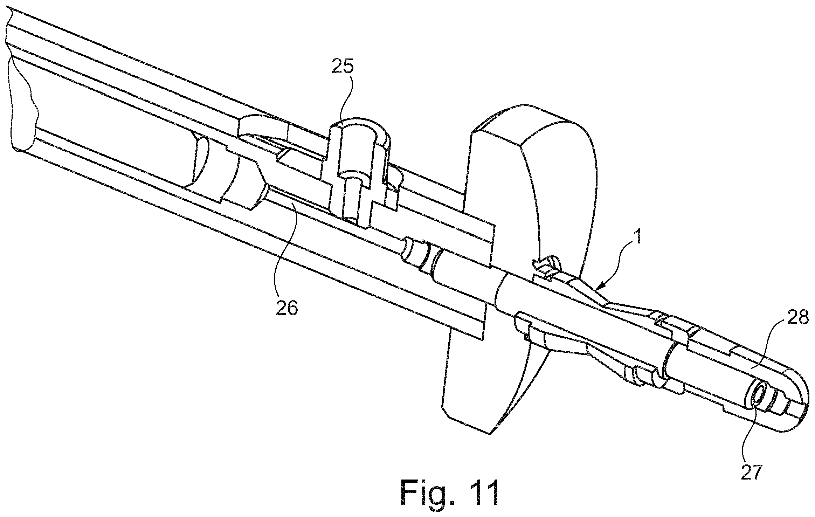

In Fig. 11 ist eine Variante der erfindungsgemäßen Vorrichtung dargestellt, die eine Kombination von Spannen, Abdichten und Befüllen in einem einzigen Arbeitszyklus ermöglicht, wobei alle diese Funktionen gleichzeitig umgesetzt werden können. Das Medium kann dabei sowohl flüssig oder auch gasförmig sein und in Form von Überdruck oder Unterdruck vorliegen.

Der Fluss des Mediums geht über ein Anschlussfitting 25 in ein Rundschieberelement 26 und dann durch einen als Hohlwelle ausgebildeten Zugbolzen 27 sowie durch ein Führungselement 28, welches durchbohrt ist.

Durch die hohe radiale Kraftübertragung, die mit der erfindungsgemäßen Vorrichtung möglich ist, kann ein Transportieren von Bauteilen in der Fertigung beschädigungsfrei ermöglicht werden. Die Spannkraft ist über die Zugbuchse 2 einstellbar, sodass ein sensibles und kräftiges Spannen möglich ist.

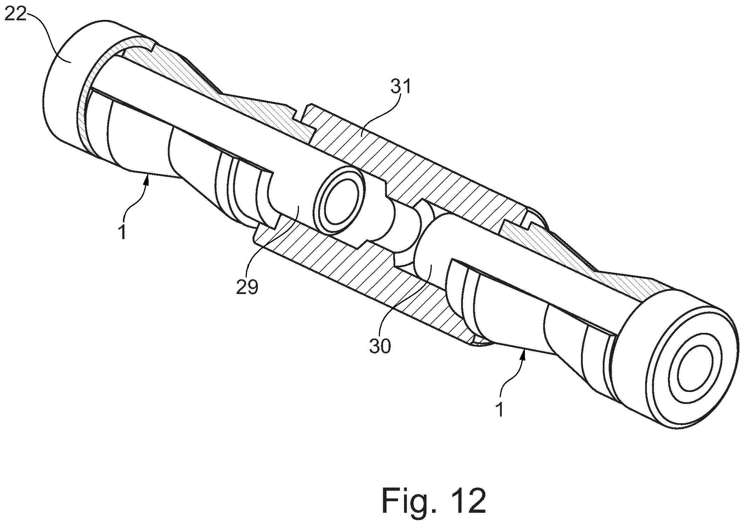

Ein weiteres Anwendungsgebiet der erfindungsgemäßen Vorrichtung ist eine übergangslose Verbindung zweier Rohrenden, wie sie in Fig. 12 dargestellt ist. Zur Verbindung der beiden Rohrenden sind zwei konkav ausgebildete Dichtkörper 1 vorgesehen, denen jeweils ein durchbohrter Zugbolzen 29 bzw. 30 zugeordnet ist, wobei einer der beiden Zugbolzen mit Linksgewinde und der andere mit Rechtsgewinde versehen ist. Die beiden Zugbolzen 29 und 30 werden dann mittels einer Spannschlossmutter 31 zusammengehalten.

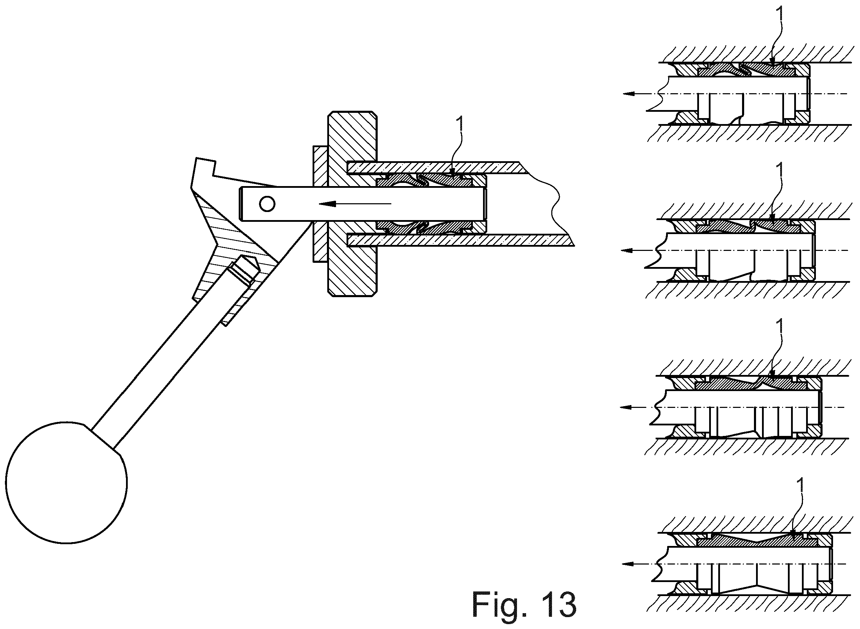

In der Fig. 13 sind die einzelnen Verformungsstufen des Dichtkörpers 1 sehr detailliert veranschaulicht. Dabei ist insbesondere im Einzelnen zu erkennen, wie sich durch die Verformung des Dichtkörpers 1 zwei Lippen bzw. Anpresszonen zwischen dem Dichtkörper 1 und der Bohrung des Bauteils bilden.

### Bezugszeichenliste

- 1: Dichtkörper
- 2: Zugbuchse
- 3: Gegenhalter
- 4: Druckplatte
- 5: Exzenter
- 6: Zugbolzen
- 7: Hebel
- 8: Werkstück
- 9: Abrollzone
- 10: hintere Dichtlippe
- 11: vordere Dichtlippe
- 12: Pneumatik- oder Hydraulikzylinder
- 13: Werkstück mit konischer Bohrung
- 14: Werkstück mit zylindrischer Bohrung
- 15: Führungselement
- 16: Pfeile
- 17: kegelstumpfförmiger Bereich
- 18: kegelstumpfförmiger Bereich
- 19: Gelenkstift
- 20: Pfeil
- 21: Ringspalt
- 22: zylindrische Abflachungen
- 23: ringzylindrische Abschnitte
- 24: Luftspalt
- 25: Anschlussfitting
- 26: Rundschieberelement
- 27: Zugbolzen
- 28: Führungselement
- 29: Zugbolzen mit Linksgewinde
- 30: Zugbolzen mit Rechtsgewinde
- 31: Spannschlossmutter

## Patentansprüche

1. Dichtungsvorrichtung für zylindrische oder konische Öffnungen mit
einem länglichen Dichtkörper (1) aus elastisch verformbarem Material,
einem Zugbolzen (6), der sich durch den mittleren, freien Durchgangsbereich des Dichtkörpers (1) erstreckt,
einer am inneren Ende des Zugbolzens (6) sitzenden Zugbuchse (2),
einem am äußeren Ende des Zugbolzens (6) angeordneten Gegenhalter (3), durch den der Zugbolzen (6) hindurchgreift, und
einem auf das äußere, durch den Gegenhalter (3) hindurchragende Ende des Zugbolzens (6) einwirkenden Betätigungselement, das bei Ausübung einer Zugkraft auf den Zugbolzen (6) den Dichtkörper (1) verformt und dabei dessen äußeren Umfang vergrößert,
wobei
der Dichtkörper (1) über seine Länge konkav ausgebildet ist, und wobei
die beiden an die engste Stelle angrenzenden Bereiche des Dichtkörpers (1) im Wesentlichen kegelstumpfförmig (17, 18) ausgebildet sind, **dadurch gekennzeichnet**
**dass**, die Dichtungsvorrichtung so ausgebildet ist, dass wenn der Zugbolzen (6) betätigt wird, durch das Zusammenziehen des Dichtkörpers (1) an seiner dünnsten Stelle eine Abrollzone (9) entsteht, bei der sich eine erste Fläche unter eine zweite Fläche schiebt und die zweite Fläche auf der ersten Fläche abrollt, wodurch bei fortschreitendem Verformungsprozess vor und hinter der Abrollzone (9) jeweils ein Wulst entsteht und sich zwei Dichtlippen bilden, und zwar eine hintere Dichtlippe (10) nahe dem Gegenhalter (3) und eine vordere Dichtlippe (11) nahe der Zugbuchse (2).

2. Dichtungsvorrichtung nach Anspruch 1,
**dadurch gekennzeichnet,**
**dass** der konkave Dichtkörper (1) seine engste Stelle etwa in seinem mittleren Bereich aufweist.

3. Dichtungsvorrichtung nach einem der vorhergehenden Ansprüche,
**dadurch gekennzeichnet,**
**dass** der Öffnungswinkel des einen kegelstumpfförmigen Bereichs (18) gleich oder größer als der auf der anderen Seite angeordnete kegelstumpfförmige Bereich (17) ist.

4. Dichtungsvorrichtung nach einem der vorhergehenden Ansprüche,
**dadurch gekennzeichnet,**
**dass** der Durchmesser der Zugbuchse (2) dem Querschnitt der abzudichtenden zylindrischen oder konischen Öffnung mit geringem Untermaß angepasst ist.

5. Dichtungsvorrichtung nach Anspruch 4,
**dadurch gekennzeichnet,**
**dass** der an die Zugbuchse (2) angrenzende Bereich des Dichtkörpers (1) einen geringfügig kleineren Durchmesser als die Zugbuchse (2) aufweist.

6. Dichtungsvorrichtung nach einem der vorhergehenden Ansprüche,
**dadurch gekennzeichnet,**
**dass** der an den Gegenhalter (3) angrenzende Bereich des Dichtkörpers (1) einen geringfügig kleineren Durchmesser als die abzudichtende Öffnung aufweist.

7. Dichtungsvorrichtung nach einem der vorhergehenden Ansprüche,
**dadurch gekennzeichnet,**
**dass** die beiden kegelstumpfförmigen Bereiche (17, 18) des Dichtkörpers (1) an ihren voneinander abgewandten Enden zylindrische Abflachungen (22) aufweisen.

8. Dichtungsvorrichtung nach einem der vorhergehenden Ansprüche,
**dadurch gekennzeichnet,**
**dass** der Dichtkörper (1) an seinen beiden Enden im Durchmesser reduzierte, ringzylindrische Abschnitte (23) aufweist, die in entsprechende Aufnahmebereiche der Zugbuchse (2) und des Gegenhalters (3) eingreifen.

9. Dichtungsvorrichtung nach einem der vorhergehenden Ansprüche,
**dadurch gekennzeichnet,**
**dass** im entspannten Zustand des Dichtkörpers (1) zwischen den äußeren Stirnenden der kegelstumpfförmigen Bereiche (17, 18) und den äußeren Anlageenden der Zugbuchse (2) und des Gegenhalters (3) je ein Luftspalt (24) vorgesehen ist.

10. Dichtungsvorrichtung nach einem der vorhergehenden Ansprüche,
**dadurch gekennzeichnet,**
**dass** das Betätigungselement, das auf den Zugbolzen (6) eine Zugkraft ausübt, als schwenkbar mit dem äußeren Ende des Zugbolzens (6) verbundener Exzenter (5) ausgebildet ist, der mit einem Hebel (7) zur Verschwenkung des Exzenters (5) ausgestattet ist.

11. Vorrichtung nach einem der vorhergehenden Ansprüche,
**dadurch gekennzeichnet,**
**dass** sie auch zum schnellen und sicheren Greifen und Lösen von Bauteilen (13, 14), die mit Bohrungen zum Innengreifen versehen sind, verwendbar ist.

12. Vorrichtung nach Anspruch 11,
**dadurch gekennzeichnet,**
**dass** sich an die Zugbuchse (2) ein Führungselement (15) anschließt, welches ein leichtes und schnelles Einführen in die entsprechende Bohrung ermöglicht.

13. Vorrichtung nach einem der vorhergehenden Ansprüche,
**dadurch gekennzeichnet,**
**dass** der Greif- und Dichtvorgang bei Dichtigkeitsprüfungen oder Befüllungsoperationen kombinierbar ist.

14. Dichtungsvorrichtung nach einem der vorhergehenden Ansprüche,
**dadurch gekennzeichnet,**
**dass** der Dichtkörper (1) aus gummielastischem Material mit einer Shore-Härte von über 75 besteht.

15. Verfahren zur Verwendung einer Dichtungsvorrichtung nach einem der vorhergehenden Ansprüche,
**dadurch gekennzeichnet,**
**dass** bei Betätigung des Zugbolzens (6) durch das Zusammenziehen des Dichtkörpers (1) an seiner dünnsten Stelle eine Abrollzone (9) entsteht, in der sich eine erste Fläche unter eine zweite Fläche schiebt und die zweite Fläche auf der ersten Fläche abrollt, wodurch bei fortschreitendem Verformungsprozess vor und hinter der Abrollzone (9) jeweils ein Wulst entsteht und sich innerhalb des abzudichtendes Werkstücks (8) zwei Dichtlippen bilden, und zwar eine hintere Dichtlippe (10) nahe dem Gegenhalter (3) und eine vordere Dichtlippe (11) nahe der Zugbuchse (2).

## Claims

1. Sealing device for cylindrical or conical orifices, having
an elongate sealing body (1) made of elastically deformable material,
a tension bolt (6) which extends through the middle, free passage region of the sealing body (1),
a tension bush (2) seated at the inner end of the tension bolt (6),
a brace (3) which is arranged at the outer end of the tension bolt (6) and through which the tension bolt (6) engages, and
an actuation element which acts upon the outer end, projecting through the brace (3), of the tension bolt (6) and which, when a tensile force is exerted upon the tension bolt (6), deforms the sealing body (1) and at the same time enlarges its outer circumference,
wherein the sealing body (1) is over its length of concave form,
and wherein the two regions of the sealing body (1) which are adjacent to the narrowest point are of essentially frustoconical form (17, 18),
**characterized in that** the sealing device is designed such that, when the tension belt (6) is actuated, the contraction of the sealing body (1) gives rise at its thinnest point to a rolling zone (9) in which a first surface is pushed below a second surface and the second surface rolls on the first surface, as a result of which, when the deformation process progresses further, a bead occurs in each case in front of and behind the rolling zone (9) and two sealing lips are formed, specifically a rear sealing lip (10) near the brace (3) and a front sealing lip (11) near the tension bush (2).

2. Sealing device according to Claim 1,
**characterized in that**
the concave sealing body (1) has its narrowest point approximately in its middle region.

3. Sealing device according to one of the preceding claims,
**characterized in that**
the apex angle of one frustoconical region (18) is identical to or larger than that of the frustoconical region (17) arranged on the other side.

4. Sealing device according to one of the preceding claims,
**characterized in that**
the diameter of the tension bush (2) is adapted with slight undersize to the cross section of the cylindrical or conical orifice to be sealed off.

5. Sealing device according to Claim 4,
**characterized in that**
that region of the sealing body (1) which is adjacent to the tension bush (2) has a slightly smaller diameter than the tension bush (2).

6. Sealing device according to one of the preceding claims,
**characterized in that**
that region of the sealing body (1) which is adjacent to the brace (3) has a slightly smaller diameter than the orifice to be sealed off.

7. Sealing device according to one of the preceding claims,
**characterized in that**
the two frustoconical regions (17, 18) of the sealing body (1) have cylindrical flattenings (22) at their ends facing away from one another.

8. Sealing device according to one of the preceding claims,
**characterized in that**
the sealing body (1) has at its two ends ring-cylindrical portions (23) of reduced diameter which engage into corresponding reception regions of the tension bush (2) and of the brace (3).

9. Sealing device according to one of the preceding claims,
**characterized in that**
in the expanded state of the sealing body (1), an air gap (24) is provided in each case between the outer end faces of the frustoconical regions (17, 18) and the outer bearing ends of the tension bush (2) and of the brace (3).

10. Sealing device according to one of the preceding claims,
**characterized in that**
the actuation element, which exerts a tensile force upon the tension bolt (6), is designed as an eccentric (5) which is connected pivotably to the outer end of the tension bolt (6) and which is equipped with a lever (7) for pivoting the eccentric (5).

11. Device according to one of the preceding claims,
**characterized in that**
it can also be used for the rapid and reliable gripping and releasing of components (13, 14) which are provided with bores for internal engagement.

12. Device according to Claim 11,
**characterized in that**
the tension bush (2) has attached to it a guide element (15) which allows easy and quick introduction into the corresponding bore.

13. Device according to one of the preceding claims,
**characterized in that**
the gripping and the sealing operation can be combined in leak tests or filling operations.

14. Sealing device according to one of the preceding claims,
**characterized in that**
the sealing body (1) is composed of elastomeric material with a Shore hardness of above 75.

15. Method for using a sealing device according to one of the preceding claims,
**characterized in that**
when the tension belt (6) is actuated, the contraction of the sealing body (1) gives rise at its thinnest point to a rolling zone (9) in which a first surface is pushed below a second surface and the second surface rolls on the first surface, as a result of which, when the deformation process progresses further, a bead occurs in each case in front of and behind the rolling zone (9) and two sealing lips are formed within the workpiece (8) to be sealed off, specifically a rear sealing lip (10) near the brace (3) and a front sealing lip (11) near the tension bush (2).

## Revendications

1. Dispositif d'étanchéité pour des ouvertures cylindriques ou coniques, comprenant
un corps d'étanchéité allongé (1) constitué de matériau déformable élastiquement,
un boulon de traction (6) qui s'étend à travers la région de passage libre centrale du corps d'étanchéité (1),
une douille de traction (2) reposant au niveau de l'extrémité intérieure du boulon de traction (6), un élément de retenue conjugué (3) disposé à l'extrémité extérieure du boulon de traction (6), à travers lequel s'engage le boulon de traction (6), et
un élément d'actionnement agissant sur l'extrémité extérieure du boulon de traction (6), pénétrant à travers l'élément de retenue conjugué (3), qui, lorsqu'une force de traction est exercée sur le boulon de traction (6), déforme le corps d'étanchéité (1) et augmente de ce fait son pourtour extérieur,
le corps d'étanchéité (1) étant réalisé sous forme concave sur sa longueur,
et les deux régions adjacentes au niveau du point le plus étroit du corps d'étanchéité (1) étant réalisées essentiellement sous forme tronconique (17, 18),
**caractérisé en ce que**
le dispositif d'étanchéité est réalisé de telle sorte que
lorsque le boulon de traction (6) est actionné, il se crée, par la compression du corps d'étanchéité (1) au niveau de son point le plus étroit, une zone de roulement (9) au niveau de laquelle une première surface se déplace sous une deuxième surface et la deuxième surface roule sur la première surface, de sorte qu'au cours de la progression du processus de déformation, il se crée un bourrelet à chaque fois avant et après la zone de roulement (9) et que deux lèvres d'étanchéité se forment, à savoir une lèvre d'étanchéité arrière (10) à proximité de l'élément de retenue conjugué (3) et une lèvre d'étanchéité avant (11) à proximité de la douille de traction (2).

2. Dispositif d'étanchéité selon la revendication 1,
**caractérisé en ce que**
le corps d'étanchéité concave (1) présente son point le plus étroit approximativement dans sa région centrale.

3. Dispositif d'étanchéité selon l'une quelconque des revendications précédentes,
**caractérisé en ce que**
l'angle d'ouverture de l'une des régions tronconique (18) est supérieur ou égal à celui sur la région tronconique (17) disposée de l'autre côté.

4. Dispositif d'étanchéité selon l'une quelconque des revendications précédentes,
**caractérisé en ce que**
le diamètre de la douille de traction (2) est adapté à la section transversale de l'ouverture cylindrique ou conique à étanchéifier, avec un léger sous-dimensionnement.

5. Dispositif d'étanchéité selon la revendication 4,
**caractérisé en ce que**
la région du corps d'étanchéité (1) adjacente à la douille de traction (2) présente un diamètre légèrement inférieur à celui de la douille de traction (2).

6. Dispositif d'étanchéité selon l'une quelconque des revendications précédentes,
**caractérisé en ce que**
la région du corps d'étanchéité (1) adjacente à l'élément de retenue conjugué (3) présente un diamètre légèrement inférieur à l'ouverture à étanchéifier.

7. Dispositif d'étanchéité selon l'une quelconque des revendications précédentes,
**caractérisé en ce que**
les deux régions tronconiques (17, 18) du corps d'étanchéité (1) présentent, au niveau de leurs extrémités opposées l'une à l'autre, des méplats cylindriques (22).

8. Dispositif d'étanchéité selon l'une quelconque des revendications précédentes,
**caractérisé en ce que**
le corps d'étanchéité (1) présente, au niveau de ses deux extrémités, des portions cylindriques annulaires (23), de diamètre réduit, qui s'engagent dans des régions de réception correspondantes de la douille de traction (2) et de l'élément de retenue conjugué (3).

9. Dispositif d'étanchéité selon l'une quelconque des revendications précédentes,
**caractérisé en ce que**
dans l'état détendu du corps d'étanchéité (1), un passage d'air (24) est à chaque fois prévu entre les extrémités frontales extérieures des régions tronconiques (17, 18) et les extrémités d'appui extérieures de la douille de traction (2) et de l'élément de retenue conjugué (3).

10. Dispositif d'étanchéité selon l'une quelconque des revendications précédentes,
**caractérisé en ce que**
l'élément d'actionnement qui exerce une force de traction sur le boulon de traction (6), est réalisé sous forme d'excentrique (5) connecté de manière pivotante à l'extrémité extérieure du boulon de traction (6), qui est muni d'un levier (7) pour faire pivoter l'excentrique (5).

11. Dispositif selon l'une quelconque des revendications précédentes,
**caractérisé en ce**
**qu'**il peut être également utilisé pour saisir et relâcher rapidement et de manière sûre des composants (13, 14) qui sont pourvus d'alésages en vue de pouvoir être saisis par l'intérieur.

12. Dispositif selon la revendication 11,
**caractérisé en ce**
**qu'**un élément de guidage (15) se raccorde à la douille de traction (2), lequel permet une introduction facile et rapide dans l'alésage correspondant.

13. Dispositif selon l'une quelconque des revendications précédentes,
**caractérisé en ce que**
l'opération de saisie et d'étanchéité peut être combinée dans des essais d'étanchéité ou des opérations de remplissage.

14. Dispositif d'étanchéité selon l'une quelconque des revendications précédentes,
**caractérisé en ce que**
le corps d'étanchéité (1) se compose de matériau ayant l'élasticité du caoutchouc, avec une dureté Shore supérieure à 75.

15. Procédé pour l'utilisation d'un dispositif d'étanchéité selon l'une quelconque des revendications précédentes,
**caractérisé en ce que**
lors de l'actionnement du boulon de traction (6), il se crée, par la compression du corps d'étanchéité (1) au niveau de son point le plus étroit, une zone de roulement (9) au niveau de laquelle une première surface se déplace sous une deuxième surface et la deuxième surface roule sur la première surface, de sorte qu'au cours de la progression du processus de déformation, il se crée un bourrelet à chaque fois avant et après la zone de roulement (9) et que deux lèvres d'étanchéité se forment à l'antérieur de la pièce (8), à savoir une lèvre d'étanchéité arrière (10) à proximité de l'élément de retenue conjugué (3) et une lèvre d'étanchéité avant (11) à proximité de la douille de traction (2).
